Europäisches Patentamt

(19) European Patent Office

Office européen des brevets

(11) Publication number : **0 549 920 B1**

## (12) EUROPEAN PATENT SPECIFICATION

(45) Date of publication of patent specification :
02.08.95 Bulletin 95/31

(51) Int. Cl.⁶ : **H02M 3/335**

(21) Application number : **92120812.0**

(22) Date of filing : **05.12.92**

(54) **Rectification system for non-resonant voltage switched converters.**

(30) Priority : **31.12.91 ES 9102904**

(43) Date of publication of application :
**07.07.93 Bulletin 93/27**

(45) Publication of the grant of the patent :
**02.08.95 Bulletin 95/31**

(84) Designated Contracting States :
**AT BE DE DK FR GB IE IT NL SE**

(56) References cited :
**EP-A- 0 316 892**
**EP-A- 0 428 377**
**US-A- 4 747 035**
**US-A- 5 008 795**

(73) Proprietor : **ALCATEL STANDARD**
**ELECTRICA, S.A.**
**Ramirez de Prado, 5/6**
**E-28045 Madrid (ES)**

(72) Inventor : **Gras Trevino, Jose Maria**
**Urbanizacion El Rinconcillo,**
**c/ Mayor s/n**
**E-28794 Guadalix de La Sierra (Madrid) (ES)**

(74) Representative : **Pohl, Herbert, Dipl.-Ing et al**
**Alcatel SEL AG**
**Patent- und Lizenzwesen**
**Postfach 30 09 29**
**D-70449 Stuttgart (DE)**

EP 0 549 920 B1

# Description

## OBJECT OF THE INVENTION

This invention, as stated in the title of this document, refers to a rectification system for non-resonant voltage switched converters, with voltage regulation by means of pulse width modulation, and which uses MOSFET transistors as rectifiers.

The invention is applicable to non-resonant switched mode power supplies, with voltage regulation by means of pulse width modulation.

## BACKGROUND TO THE INVENTION

When it is desired to increase the efficiency of the rectifier stage of non-resonant voltage switched converters, it is possible to make use of MOSFET transistors instead of the conventional diode rectifiers.

However, the use of MOSFET rectifier transistors in the rectifier stage presents, basically, two problems:

a) the amplification of the input capacitance value of the MOSFET rectifier transistors (Miller effect) at the instants of switching, with the corresponding increase in complexity of the drive circuit and in its power losses; and

b) the appearance of a shortcircuit in the main power supply unit at the instants of switching in the MOSFET rectifier transistors, with the consequent loss of power due to the shortcircuit itself, as well as difficulties in the switching of the MOSFET rectifier transistors due to the high transient currents flowing at the instants of switching.

The publication "MOSFETs move in on low voltage rectification (TA84-2)", pages 5-69 to 5-74, MOSPOWER APPLICATIONS, 1985 Handbook, Siliconix Incorporated, mentions the presence of this shortcircuit in the main power supply unit, and a solution is proposed in order to minimize its effects.

Nevertheless, the solution proposed in the publication previously mentioned makes no reference to, and consequently gives no type of solution to, the problem of the increase in input capacitance of the MOSFET rectifier transistors in the instants of switching, and the shortcircuiting problem is not eliminated but simply diminished.

## TECHNICAL PROBLEM TO BE OVERCOME

Consequently, the technical problem to be solved is to achieve the reduction of the amplified value of input capacitance (Miller effect) at the instants of switching the MOSFET rectifier transistors, and to prevent the appearance of a shortcircuit in the main power supply unit at such instants.

## CHARACTERIZATION OF THE INVENTION

To solve the technical problems previously mentioned, this rectification system is characterized in that the switching actions of the MOSFET rectifier transistors occurs at a drain to source voltage with a value equivalent to the cathode to anode voltage drop of a diode in conduction, that is, close to zero volts, whereby the amplification in input capacitance (Miller effect) of the MOSFET rectifier transistors is reduced at the instants they are switched.

This system is also characterized in that the other switches in the converter are in the cutoff or conduction state when any switching takes place in the MOSFET rectifier transistors, meaning that the change of state from cutoff to conduction, or vice versa, of the MOSFET rectifier transistors never occurs simultaneously with the change of state in the other switches in the converter.

Another characteristic of our system, valid for converters with push-pull or forward topologies, is the special way in which the times of conduction of the MOSFET transistors and diodes are controlled as rectifying elements. The diodes mentioned earlier can be external diodes or the actual internal diodes of the MOSFET transistors.

Specifically, the conduction times of the MOSFET rectifier transistors would be situated within the "natural" conduction times of the corresponding rectifier diodes in the case of absence of drive for the MOSFET rectifier transistors.

On the other hand, the drain to source voltage of the MOSFET rectifier transistors is, at the instants of switching, equal to the cathode to anode voltage drop of the corresponding internal diode or external rectifier diode, and is very close to zero volts.

Since the "natural" conduction times of the internal diodes of the MOSFET rectifier transistors are determined by the change in state of the other non-rectifier switches in the converter, the change of state from cutoff to conduction, or vice versa, of the MOSFET rectifier transistors can never occurs simultaneously with the change in state of the other switches in the system; in this way, the possible shortcircuit in the main power supply unit is avoided at the instants of switching of the MOSFET rectifier transistors.

Another characteristic of this system, is that, in an alternative implementation, only valid for converters with a forward topology, the period of conduction of the "main" non-rectifying switch of the converter lies within the conduction period of the "main" MOSFET rectifier transistor. The conduction period of the MOSFET rectifier transistor that has the free wheeling function, is complementary to the conduction period of the "main" MOSFET rectifier transistor.

Under these circumstances, what was commented earlier concerning switching of MOSFET rectifier transistors at voltages very close to zero and the impossibility of there being shortcircuits in the main power supply unit during the instants of switching of the MOSFET rectifier transistors, becomes valid once again.

In addition, the internal diode of the "main" MOSFET rectifier transistor or the equivalent external rectifier diode never reaches the conduction state.

This rectification system, in addition to resolving the technical problems, permits the efficiency of the rectifier stage of the converters and, consequently, of the actual converter to be improved.

## BRIEF FOOTNOTES TO THE FIGURES

Figure 1 shows a block diagram of a non-resonant voltage switched converter.

Figure 2 shows the basic schematic of a switched mode converter with push-pull topology and MOSFET rectification, in accordance with the state of the art.

Figure 3 shows the basic schematic of a switched mode converter with forward topology and MOSFET rectification, according to the state of the art.

Figure 4 shows the basic schematic of a switched mode converter with push-pull topology, according to the invention.

Figure 5C shows the basic schematic of a switched mode converter with forward topology according to the invention.

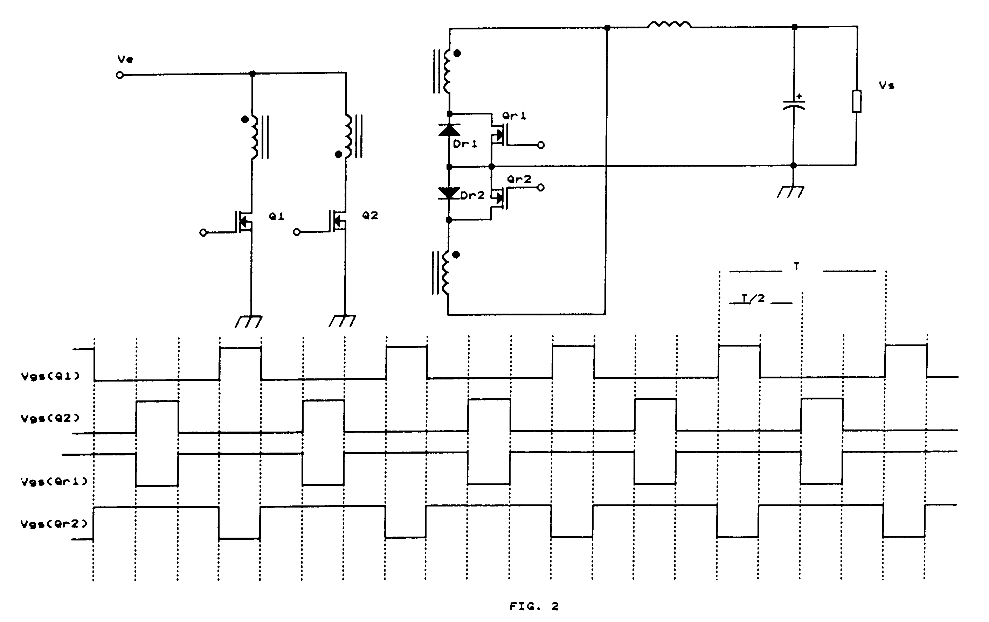

Figures 2 to 4 also show the set of drive signals of the MOSFET rectifier transistors of the corresponding switched mode converters.

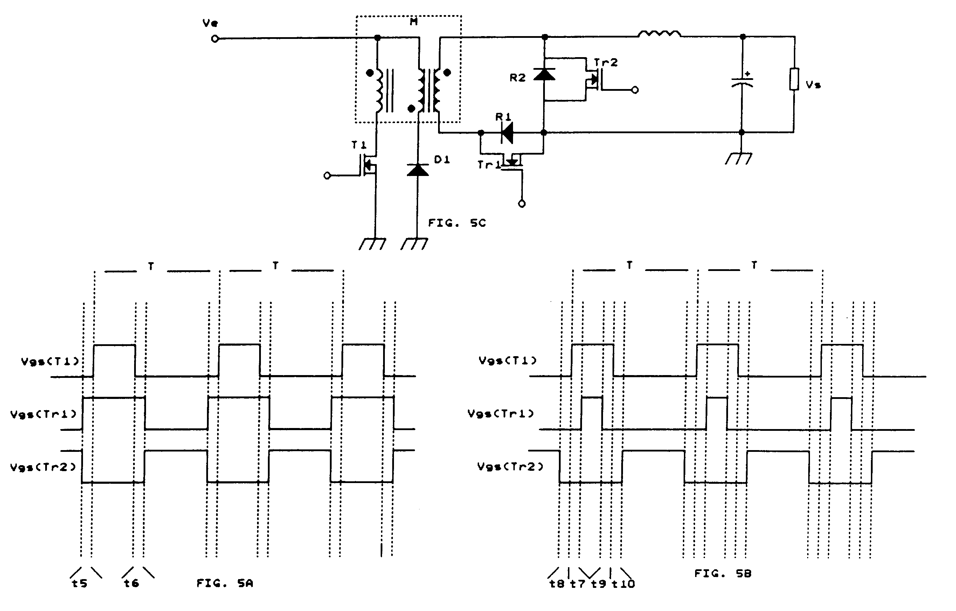

Figures 5A and 5B show two sets of drive signals of the MOSFET rectifier transistors to implement the invention in the case of a forward topology.

## DESCRIPTION OF THE INVENTION

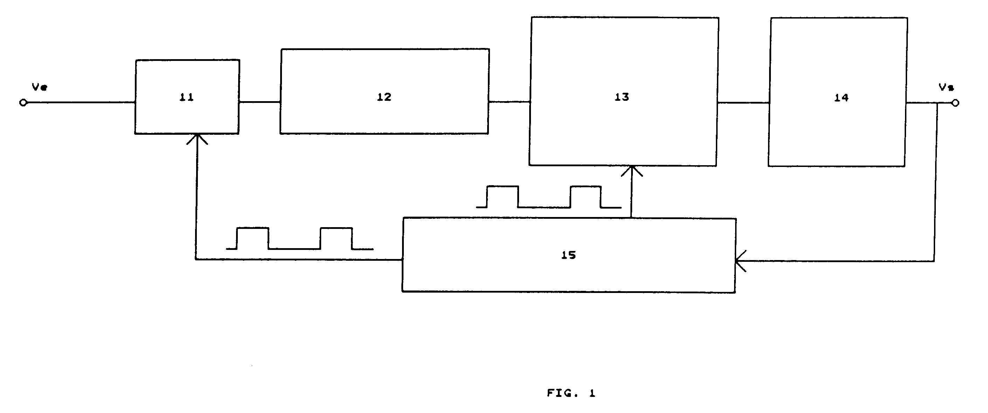

Figure 1 shows the block diagram of a converter with pulse width modulation and MOSFET rectification. It is formed by a main switch 11, a power transformer 12, a rectifier stage with MOSFET and diode 13, an output filter 14 and a control circuit 15.

Block 13 represents the rectifier stage formed by MOSFET transistors and diodes. The diode is intentionally specified because it must be in the rectifier stage of the converter. The rectification system of the invention is based on the use of both devices in the rectification. Actually, it is a superpositioning of both rectifying techniques. There are therefore two rectifying devices, MOSFET and diode, though in many cases the actual internal diode of the MOSFET rectifier will be capable of performing the function of the rectifier diode.

When one of the main switches of the converter (normally MOSFET also) changes state, it causes the corresponding rectifier diode to conduct. The MOSFET rectifiers are connected with their sources to the anode and their drains to the cathode of the rectifier diode. A period of time after the rectifier diode has started to conduct, the MOSFET transistor(s) connected between the anode and cathode of the corresponding diode will start to conduct. As the source to drain voltage drop is less than the anode to cathode voltage drop of the rectifier diode, the current will then flow through the MOSFET transistors. A short period of time before the main switch changes state and, consequently, the corresponding rectifier diode changes polarity between anode and cathode and enters the cutoff state, the corresponding MOSFET rectifier(s) must also pass to the cutoff state, and the current will flow through the rectifier diode or the internal diode of the MOSFET transistor until the end of this topological arrangement. The conduction period of the MOSFET rectifier(s) lies within the conduction period of the rectifier diode(s). In this way the voltage drop of the MOSFET rectifier(s) at the instants of changing state is the voltage drop during conduction of the corresponding rectifier diode, which is very close to zero volts. The amplification of the input capacitance of the MOSFET rectifiers due to the Miller effect is therefore almost cancelled out since the variation in the drain to source voltage with respect to the gate to source voltage is very small.

Ciss = Input capacitance

Cgs = Gate-to-source capacitance

Cdg = Drain-to-gate capacitance

$Ciss = Cgs + Cgd(1 - \partial Vds/\partial Vgs)$.

The term $\partial Vds/\partial Vgs$ is negative and the gate-to-drain capacitance undergoes an amplification just in the instant of switching.

If $Vds \simeq 0$, then:

$$(\partial Vds/\partial Vgs) \simeq 0,$$

and the Miller effect is cancelled.

In this case, the input capacitance would equal:

$$Ciss \simeq Cgs + Cdg.$$

The main non-rectifying switch(es) will be in one conduction state (fully conducting or cutoff, if not then the rectifier diodes would be changing state) when any of the MOSFET rectifiers is going to change state. In this way a shortcircuit is avoided in the main power supply at the instants when the MOSFET transistors are changing state. The internal diode of the rectifier MOSFETs can act as a rectifier diode, whereby no additional component is necessary.

Whenever possible, the rectifier MOSFETs will be switched when the main switches of the converter are in a cutoff state, and not conducting. This can be achieved by applying the general solution already explained when using a push-pull topology. In the forward topology, a different solution can be found which, in addition to resolving the technical problem, avoids the main diode coming into the conduction state whereby the switching of the rectifier transistors occurs with the main switch in a cutoff state.

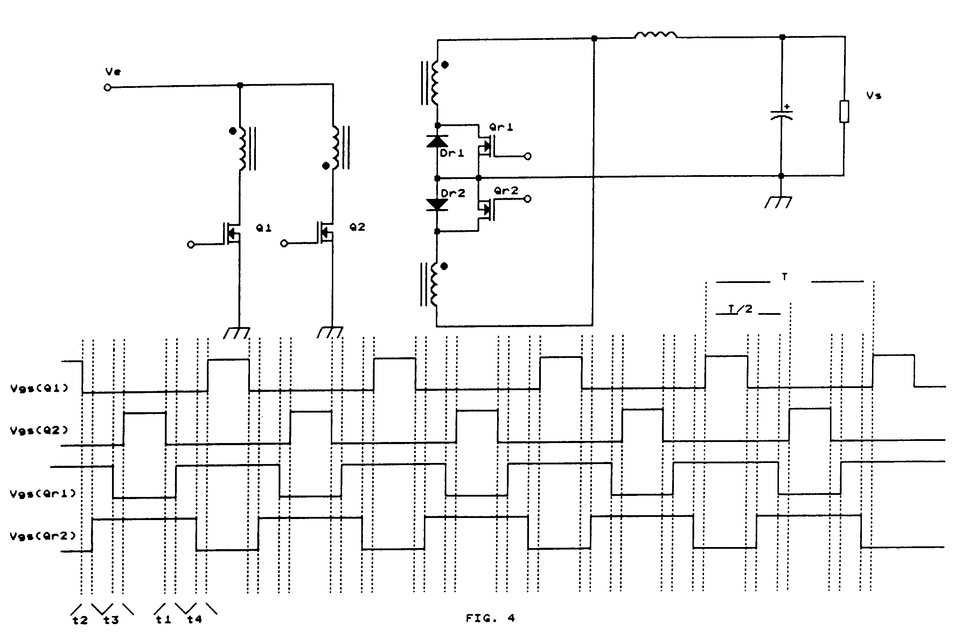

Figure 2 shows the basic schematic of a push-pull converter with MOSFET rectification (Qr1 and Qr2 represent more than one transistor mounted in parallel). In the push-pull arrangement, the intervals of time between the coming into conduction of one of the non-rectifying switches Q1 or Q2 and the change to cutoff of the other non-rectifying switch Q2 or Q1, are time intervals in which the switches Q1 or Q2 are in a cutoff state. In the absence of a drive signal for Qr1 and Qr2 (Vgs(Qr1)=0, Vgs(Qr2)=0) and during the intervals of time mentioned, both rectifier diodes Dr1 and Dr2 are conducting, whereby the drain to source voltage of the rectifier MOSFETs is the cathode to anode voltage drop of the corresponding diodes in conduction, which is very close to zero volts. The waveforms that must be produced for the operation of the converter switches can be seen in figure 4. These waveforms contrast with the traditional drive signal waveforms for these switches shown in figure 2. In the waveforms produced by the system of the invention (figure 4), the following details can be observed:

When the transistor Q1 passes to the cutoff state, there is a small period of time before the transistor Qr2 starts to conduct. In this period of time the current flows through the internal diode of the rectifier MOSFET Qr2 and the channel of rectifier MOSFET rectifier Qr1. When the transistor Qr2 is going to start to conduct, the internal diode will be conducting and the drain to source voltage of the MOSFET Qr2 will be that of the cathode to anode voltage drop of the conducting internal diode. This voltage is very close to zero volts, whereby the Miller effect can be considered to be cancelled since there is no variation between the drain to source voltage and the gate to source voltage. The change to conduction of the transistor Qr2 is done with the switches of the converter Q1 and Q2 in their cutoff state. In this way there is no possibility of shortcircuiting the main power supply unit Ve at the instant the MOSFET rectifier Qr2 changes to the conduction state. Likewise it can be seen that before the switch Q1 passes to the conduction state, the MOSFET transistor Qr2 passes to cutoff, this last change of state of Qr2 occurring under the same conditions as its change to the conduct ion state. The Miller effect has therefore been cancelled and shortcircuiting of the main power supply Ve is avoided at the instants of switching in the MOSFET rectifier transistor Qr2. The situation for the transistors Q2 and Qr1 is exactly the same. The same reasoning as was given in the explanation of how switching occurred in the rectifier transistor Qr2, depending on the conduction state of the switch Q1, is valid for determining how switching occurs in the rectifier transistor Qr1 as a function of the conduction state of switch Q2. In the explanation, it is only necessary to substitute Q2 for Q1 and Qr1 for Qr2. Notice in figure 4 that the switching of Qr1 and Qr2 take place with both switches Q1 and Q2 in a cutoff state, which is, as has already been explained, the optimum situation for switching Qr1 and Qr2.

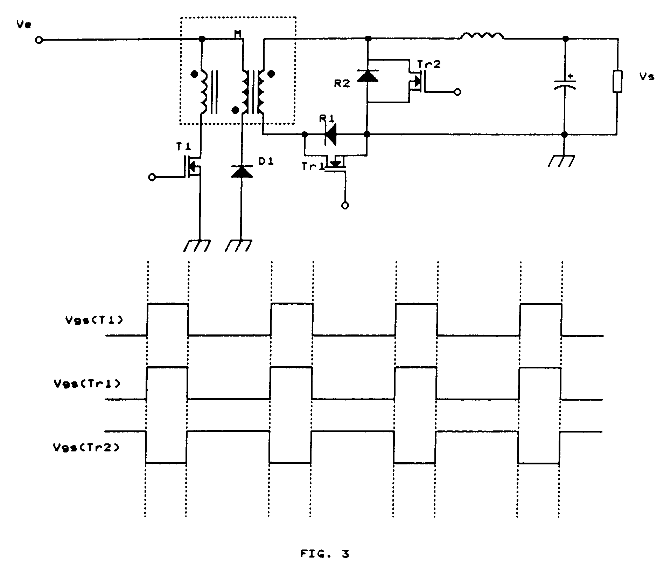

In figure 3 the basic configuration for a forward converter with MOSFET rectification can be seen. The figure shows the waveforms of the gate to source voltage which has been traditionally used to drive the converter's MOSFET switches. Figures 5A and 5B show the waveforms proposed by the system of the invention. There are two possible waveform groups to drive the converter switches: the Fig. 5A group and the Fig. 5B group. In the Fig. 5B group, the periodic conduction intervals of the MOSFET rectifier transistors Tr1 and Tr2 are introduced within the conduction interval that would correspond to each diode R1, R2 in the absence of a drive signal for the corresponding MOSFET rectifier transistors Tr1, Tr2. In this way, as explained before, the technical problem is solved, but it is not possible to make the MOSFET rectifiers switch with the T1 switch in the cutoff state which, as has already been indicated, is the optimum situation for the switching of the MOSFET rectifiers. The Fig. 5A waveform group, however, manages to overcome the technical problem, cancel the Miller effect, avoiding also shortcircuiting of the main power supply at the instants of MOSFET rectifier switching, and that the switching of MOSFET rectifier transistors Tr1 and Tr2 occur with the switch T1 in the cutoff state. In addition, the main rectifier diode R1 does not conduct in any time interval of the switching period.

The operation of the converter with forward topology, when the MOSFETs of the converter are driven with the waveform set of figure 5A is as follows:

A time interval t5 before the switch T1 assumes its conduction state, the main rectifier transistor Tr1 is brought into its conduction state. The transistor that performs the free wheeling function was already in its conduction state and, when Tr1 starts to conduct, Tr2 changes to its cutoff state, resulting in the current flowing through the internal diode R2 until T1 assumes its conduction state.

In this time interval, termed "t5" in figure 5A, the drain to source voltage of the MOSFET Tr1 is the cathode to anode voltage drop of the internal diode R2 of the MOSFET transistor Tr2 while conducting, consequently the switching takes place with a drain to source voltage close to zero. The possible shortcircuiting of the secondary of the transformer M in the crossover between Tr1 and Tr2 switching does not affect the operation of the topology, since the switch T1 is in open circuit and the diode D1 cannot be conducting. In fact, the transformer secondary winding is placed in a situation of "virtual shortcircuit" for the duration of time interval t5. A shortcircuit is produced in the secondary since Tr1 and the internal diode R2 of Tr2 are both conducting. Nevertheless, the primary is in open circuit since T1 is cut off and, because the core of the transformer is demagnetized, the diode D1 is in open circuit. This means no current can flow in any of the transformer windings. When the switch T1 passes to the conduction state, the main rectifier transistor Tr1 is already in its conduction state whereby the internal diode R1 of Tr1 never conducts.

In the time interval t6, transistor T1 becomes cut off. The internal diode R2 of the transistor Tr2 will come into the conduction state. By the time this happens, the switch T1 is already fully cut off, and the primary of the transformer M is in open circuit. The shortcircuit formed in the secondary of the transformer M in this interval, receives no input from the main power supply. With the secondary shortcircuited through Tr1 and the internal diode R2 of Tr2, the value of the voltage across the transformer winding is almost zero volts; therefore the transformer M cannot lose its magnetism until this situation is terminated and the transistor Tr1 is cut off. Both transistors Tr1 and Tr2 switch with drain to source voltage very close to zero, and it can be seen by referring to figure 5A that any switching of the rectifier transistors Tr1 and Tr2 occurs with the switch T1 and the diode D1 in open circuit. In this way it is possible to avoid the shortcircuiting of the main power supply when the MOSFET transistors Tr1 and Tr2 are about to perform a switching process.

**Claims**

1.  **RECTIFICATION SYSTEM FOR NON-RESONANT VOLTAGE SWITCHED CONVERTERS**, with voltage regulation by means of pulse width modulation, that uses MOSFET transistors as rectifiers, <u>characterized:</u>
    - in that the switching actions of the MOSFET rectifier transistors occur at a drain to source voltage with a value equivalent to the cathode to anode voltage drop of a diode in conduction, that is, close to zero volts, whereby the increase in input capacitance (Miller effect) of the MOSFET rectifier transistors is reduced at the instants they are switched; and
    - in that the other switches in the converter are in the cutoff or conduction state when any switching takes place in the MOSFET rectifier transistors, meaning that the change of state from cutoff to conduction, or vice versa, of the MOSFET rectifier transistors never occurs simultaneously with the change of state of the other switches in the converter, whereby the occurrence of a shortcircuit in the main power supply is avoided at the instants of switching in the MOSFET rectifier transistors.

2.  **RECTIFICATION SYSTEM FOR NON-RESONANT VOLTAGE SWITCHED CONVERTERS** according to claim 1, <u>characterized,</u> in the case

of a converter with a push-pull topology:
    - in that each MOSFET rectifier transistor (Qr2, Qr1) passes to the conduction state a few short time intervals (t2, t1) after each switch (Q1, Q2) has passsed to the cutoff or non-conducting state, the current during these time intervals (t2, t1) flowing through the respective internal diodes (Dr2, Dr1) of the corresponding MOSFET rectifier transistors (Qr2, Qr1) and through the channels of the other MOSFET rectifier transistors (Qr1, Qr2);
    - in that the drain to source voltage drop of the corresponding MOSFET rectifier transistors (Qr2, Qr1) during these time intervals (t2, t1) is equal to the cathode to anode voltage drop of their respective internal diodes (Dr2, Dr1) and, consequently, the change in state from cutoff to conduction of the MOSFETs (Qr2, Qr1) occurs with a drain to source voltage very close to zero volts; and
    - in that the change from cutoff to conduction of these MOSFETs (Qr2, Qr1) occurs with the switches (Q1, Q2) in the cutoff state, whereby it is impossible to have a shortcircuit of the main power supply (Ve) in the change from cutoff to conduction of the corresponding MOSFET rectifier transistors (Qr2, Qr1).

3.  **RECTIFICATION SYSTEM FOR NON-RESONANT VOLTAGE SWITCHED CONVERTERS** according to claim 2, <u>characterized</u> also:
    - in that the corresponding MOSFET rectifier transistors (Qr2, Qr1) pass to the cutoff state a few short time intervals (t4, t3) before the respective switches (Q1, Q2) pass to the conduction state, the current during these time intervals (t4, t3) flowing through the respective internal diodes (Dr2, Dr1) of the MOSFETs (Qr2, Qr1) and through the channels of the corresponding MOSFET rectifier transistors (Qr1, Qr2);
    - in that the drain to source voltage drop of the corresponding MOSFET rectifier transistors (Qr2, Qr1) during these time intervals (t4, t3) is equal to the cathode to anode voltage drop of their respective internal diodes (Dr2, Dr1) and, consequently, the change in state from conduction to cutoff of the MOSFETs (Qr2, Qr1) occurs with a drain to source voltage very close to zero volts; and
    - in that the change from conduction to cutoff of these MOSFETs (Qr2, Qr1) occurs with the switches (Q1, Q2) in the cutoff state, whereby it is impossible to have a shortcircuit of the main power supply in the change from conduction to cutoff of the corresponding MOSFET rectifier transistors (Qr2, Qr1).

4. **RECTIFICATION SYSTEM FOR NON-RESONANT VOLTAGE SWITCHED CONVERTERS** according to claim 1, **characterized,** in the case of a converter with forward topology:
- in that the MOSFET rectifier transistors (Tr1, Tr2) pass from the state of cutoff to conduction (Tr1) and from conduction to cutoff (Tr2) respectively, a short time interval (t5) before the switch (T1) passes from its cutoff to conduction state, the current during this time interval flowing through the internal diode (R2) of the MOSFET rectifier transistor (Tr2);
- in that the drain to source voltage drop of the MOSFET rectifier transistor (Tr2) during this time interval (t5) is equal to the cathode to anode voltage drop in its internal diode (R2) and, consequently, the change in state from conduction to cutoff of the second MOSFET (Tr2) occurs with a drain to source voltage very close to zero volts;
- in that the maximum drain to source voltage drop of the first MOSFET rectifier transistor (Tr1) in the change from cutoff to conduction is equal to the cathode to anode voltage drop in the internal diode of the second MOSFET rectifier transistor (Tr2) and, consequently, the change in state from cutoff to conduction of the first MOSFET (Tr1) occurs with a drain to source voltage very close to zero volts; and
- in that the change from cutoff to conduction of the first MOSFET (Tr1) and from conduction to cutoff of the second MOSFET (Tr2) occurs with the switch (T1) and the diode (D1) in the cutoff state, whereby it is impossible to have a shortcircuit in the main power supply (Ve) in the change from cutoff to conduction of the first MOSFET (Tr1) and from conduction to cutoff of the second MOSFET (Tr2).

5. **RECTIFICATION SYSTEM FOR NON-RESONANT VOLTAGE SWITCHED CONVERTERS** according to claim 4, **characterized** also:
- in that the MOSFET rectifier transistors (Tr1, Tr2) pass from the state of conduction to cutoff (Tr1) and from cutoff to conduction (Tr2), a short time interval (t6) after the switch (T1) passes from its conduction to cutoff state, the current during this time interval (t6) flowing through the internal diode (R2) of the MOSFET rectifier transistor (Tr2);
- in that during this time interval (t6) the total voltage drop across the windings of the transformer (M) is very close to zero volts, and the diode (D1) is in the cutoff state;
- in that the drain to source voltage drop of the second MOSFET rectifier transistor (Tr2) during this time interval (t6) is equal to the cathode to anode voltage drop in its internal diode (R2) and, consequently, the change in state from cutoff to conduction of the second MOSFET (Tr2) occurs with a drain to source voltage very close to zero volts;
- in that the maximum drain to source voltage drop of the first MOSFET rectifier transistor (Tr1) in the change from conduction to cutoff is equal to the cathode to anode voltage drop in the internal diode of the second MOSFET rectifier transistor (Tr2) and, consequently, the change in state from conduction to cutoff of the first MOSFET (Tr1) occurs with a drain to source voltage very close to zero volts; and
- in that the change from conduction to cutoff of the first MOSFET (Tr1) and from cutoff to conduction of the second MOSFET (Tr2) occurs with the switch (T1) and the diode (D1) in the cutoff state, whereby it is impossible to have a shortcircuit in the main power supply (Ve) in the change from conduction to cutoff of the first MOSFET (Tr1) and from cutoff to conduction of the second MOSFET (Tr2).

6. **RECTIFICATION SYSTEM FOR NON-RESONANT VOLTAGE SWITCHED CONVERTERS** according to claims 4 and 5, **characterized** in that the internal diode (R1) of the first MOSFET rectifier transistor (Tr1) is never in a conduction state.

7. **RECTIFICATION SYSTEM FOR NON-RESONANT VOLTAGE SWITCHED CONVERTERS** according to claim 1, **characterized,** alternatively in the case of a converter with forward topology:
- in that the MOSFET rectifier transistors (Tr1, Tr2) pass from the state of cutoff to conduction (Tr1) and from conduction to cutoff (Tr2) respectively, a few short time intervals (t7 for Tr1, t8 for Tr2) after and before, respectively, the switch (T1) passes from its cutoff to conduction state, the current during these time intervals (t7, t8), flowing through the respective internal diodes (R1, R2) of the MOSFETs (Tr1, Tr2),
- in that the drain to voltage drop source of the MOSFET rectifier transistors (Tr1, Tr2) during these time intervals (t7, t8) is equal to the cathode to anode voltage drop in the respective internal diodes (R1, R2) and, consequently, the change in state from cutoff to conduction of the first MOSFET (Tr1), and from conduction to cutoff of the second MOSFET (Tr2) occurs with a drain to source voltage very close to zero volts;

- in that the change from conduction to cutoff of the second MOSFET (Tr2) occurs with the switch (T1) and the diode (D1) in the cutoff state, whereby it is impossible to have a shortcircuit in the main power supply (Ve) in the change from conduction to cutoff of the second MOSFET (Tr2); and
- in that the change from cutoff to conduction of the first MOSFET (Tr1) occurs after the switch (T1) has passed to the conduction state, whereby it is impossible to have a shortcircuit in the main power supply (Ve) in the change from cutoff to conduction of the first MOSFET (Tr1) since at this instant the second MOSFET (Tr2), its internal diode (R2) and the diode (D1) are in the cutoff state.

8. **RECTIFICATION SYSTEM FOR NON-RESONANT VOLTAGE SWITCHED CONVERTERS** according to claim 7, **characterized,** also:
   - in that the MOSFET rectifier transistors (Tr1, Tr2) pass from the state of conduction to cutoff (Tr1) and from cutoff to conduction (Tr2) respectively, a few short time intervals (t9 for Tr1, t10 for Tr2) before and after, respectively, the switch (T1) passes from its conduction to cutoff state, the current during these time intervals (t9, t10) flowing through the respective internal diodes (R1, R2) of the MOSFETs (Tr1, Tr2);
   - in that the drain to source voltage drop of the MOSFET rectifier transistors (Tr1, Tr2) during these time intervals (t9, t10) is equal to the cathode to anode voltage drop in the respective internal diodes (R1, R2) and, consequently, the change in state from conduction to cutoff of the first MOSFET (Tr1), and from cutoff to conduction of the second MOSFET (Tr2) occurs with a drain to source voltage very close to zero volts;
   - in that the change from cutoff to conduction of the second MOSFET (Tr2) occurs with the switch (T1) in the cutoff state, the diode (D1) in the conduction state, and the first MOSFET (Tr1) and its internal diode (R1) in the cutoff state, whereby it is impossible to have a shortcircuit in the main power supply (Ve) in the change from cutoff to conduction of the second MOSFET (Tr2); and
- in that the change from conduction to cutoff of the first MOSFET (Tr1) occurs with the switch (T1) in its conduction state, the diode (D1) in the cutoff state, and the second MOSFET (Tr2) and its internal diode (R2) in the cutoff state, whereby it is impossible to have a shortcircuit in the main power supply (Ve) in the change from conduction to cutoff of the first MOSFET (Tr1).

**Patentansprüche**

1. Gleichrichtungssystem für aperiodische spannungsgeschaltete Wandler, bei dem die Spannungsregelung mittels Pulsbreitenmodulation erfolgt und das MOSFET-Transistoren als Gleichrichter einsetzt und dadurch **gekennzeichnet** ist,
   - daß die Schaltvorgänge der MOSFET-Gleichrichtertransistoren bei einer Drain-Source-Spannung erfolgen, deren Wert gleich dem Spannungsabfall zwischen Katode und Anode einer Diode im leitenden Zustand ist, das heißt, nahe bei null Volt liegt, wodurch die Zunahme der Eingangskapazität (Miller-Effekt) der MOSFET-Gleichrichtertransistoren in den Momenten reduziert wird, in denen sie geschaltet werden; und
   - daß sich die anderen Schalter in dem Wandler im gesperrten Zustand oder im leitenden Zustand befinden, wenn in den MOSFET-Gleichrichtertransistoren ein Schaltvorgang stattfindet, was bedeutet, daß die Änderung des Zustands der MOSFET-Gleichrichtertransistoren von gesperrt in leitend oder umgekehrt niemals gleichzeitig mit der Änderung des Zustands der anderen Schalter in dem Wandler erfolgt, wodurch das Auftreten eines Kurzschlusses in der Hauptstromversorgung in den Momenten vermieden wird, in denen es in den MOSFET-Gleichrichtertransistoren zu einem Schaltvorgang kommt.

2. Gleichrichtungssystem für aperiodische spannungsgeschaltete Wandler nach Anspruch 1, das, im Falle eines Wandlers mit Gegentakttopologie, dadurch **gekennzeichnet** ist,
   - daß jeder MOSFET-Gleichrichtertransistor (Qr2, Qr1) ein paar kurze Zeitintervalle (t2, t1) nachdem jeder Schalter (Q1, Q2) in den gesperrten oder nichtleitenden Zustand übergegangen ist, in den leitenden Zustand übergeht, wobei der Strom während dieser Zeitintervalle (t2, t1) durch die jeweiligen internen Dioden (Dr2, Dr1) der entsprechenden MOSFET-Gleichrichtertransistoren (Qr2, Qr1) und durch die Kanäle der anderen MOSFET-Gleichrichtertransistoren (Qr1, Qr2) fließt;

- daß der Drain-Source-Spannungsabfall der entsprechenden MOSFET-Gleichrichtertransistoren (Qr2, Qr1) während dieser Zeitintervalle (t2, t1) gleich dem Katoden-Anoden-Spannungsabfall ihrer jeweiligen internen Dioden (Dr2, Dr1) ist und die Änderung des Zustands der MOSFETs (Qr2, Qr1) von gesperrt in leitend folglich mit einer Drain-Source-Spannung erfolgt, die sehr nahe bei null Volt liegt; und

- daß der Wechsel dieser MOSFETs (Qr2, Qr1) vom gesperrten in den leitenden Zustand erfolgt, wenn sich die Schalter (Q1, Q2) im gesperrten Zustand befinden, wodurch es unmöglich ist, daß es beim Wechsel der entsprechenden MOSFET-Gleichrichtertransistoren (Qr2, Qr1) vom gesperrten in den leitenden Zustand zu einem Kurzschluß in der Hauptstromversorgung (Ve) kommt.

3. Gleichrichtungssystem für aperiodische spannungsgeschaltete Wandler nach Anspruch 2, das auch dadurch **gekennzeichnet** ist,

- daß die entsprechenden MOSFET-Gleichrichtertransistoren (Qr2, Qr1) ein paaar kurze Zeitintervalle (t4, t3) vor dem Übergang der jeweiligen Schalter (Q1, Q2) in den leitenden Zustand in den gesperrten Zustand übergehen, wobei der Strom während dieser Zeitintervalle (t4, t3) durch die jeweiligen internen Dioden (Dr2, Dr1) der MOSFETs (Qr2, Qr1) und durch die Kanäle der entsprechenden MOSFET-Gleichrichtertransistoren (Qr1, Qr2) fließt;

- daß der Drain-Source-Spannungsabfall der entsprechenden MOSFET-Gleichrichtertransistoren (Qr2, Qr1) während dieser Zeitintervalle (t4, t3) gleich dem Katoden-Anoden-Spannungsabfall ihrer jeweiligen internen Dioden (Dr2, Dr1) ist und die Änderung des Zustands der MOSFETs (Qr2, Qr1) von leitend in gesperrt folglich mit einer Drain-Source-Spannung erfolgt, die sehr nahe bei null Volt liegt; und

- daß der Wechsel dieser MOSFETs (Qr2, Qr1) vom leitenden in den gesperrten Zustand erfolgt, wenn sich die Schalter (Q1, Q2) im gesperrten Zustand befinden, wodurch es unmöglich ist, daß es beim Wechsel der entsprechenden MOSFET-Gleichrichtertransistoren (Qr2, Qr1) vom leitenden in den gesperrten Zustand zu einem Kurzschluß in der Hauptstromversorgung (Ve) kommt.

4. Gleichrichtungssystem für aperiodische spannungsgeschaltete Wandler nach Anspruch 1, das, im Falle eines Wandlers mit Durchflußtopologie, dadurch **gekennzeichnet** ist,

- daß die MOSFET-Gleichrichtertransistoren (Tr1, Tr2) ein kurzes Zeitintervall (t5) vor dem Übergang des Schalters (T1) vom gesperrten in den leitenden Zustand vom gesperrten in den leitenden Zustand (Tr1) beziehungsweise vom leitenden in den gesperrten Zustand (Tr2) übergehen, wobei der Strom während dieses Zeitintervalls durch die interne Diode (R2) des MOSFET-Gleichrichtertransistors (Tr2) fließt;

- daß der Drain-Source-Spannungsabfall des MOSFET-Gleichrichtertransistors (Tr2) während dieses Zeitintervalls (t5) gleich dem Katoden-Anoden-Spannungsabfall in seiner internen Diode (R2) ist und die Änderung des Zustands des zweiten MOSFETs (Tr2) von leitend in gesperrt folglich mit einer Drain-Source-Spannung erfolgt, die sehr nahe bei null Volt liegt;

- daß der maximale Drain-Source-Spannungsabfall des ersten MOSFET-Gleichrichtertransistors (Tr1) beim Wechsel vom gesperrten in den leitenden Zustand gleich dem Katoden-Anoden-Spannungsabfall in der internen Diode des zweiten MOSFET-Gleichrichtertransistors (Tr2) ist und die Änderung des Zustands des ersten MOSFETs (Tr1) von gesperrt in leitend folglich mit einer Drain-Source-Spannung erfolgt, die sehr nahe bei null Volt liegt; und

- daß der Wechsel des ersten MOSFETs (Tr1) vom gesperrten in den leitenden Zustand und der Wechsel des zweiten MOSFETs (Tr2) vom leitenden in den gesperrten Zustand erfolgt, wenn sich der Schalter (T1) und die Diode (D1) im gesperrten Zustand befinden, wodurch es unmöglich ist, daß es beim Wechsel des ersten MOSFETs (Tr1) vom gesperrten in den leitenden Zustand und beim Wechsel des zweiten MOSFETs (Tr2) vom leitenden in den gesperrten Zustand zu einem Kurzschluß in der Hauptstromversorgung (Ve) kommt.

5. Gleichrichtungssystem für aperiodische spannungsgeschaltete Wandler nach Anspruch 4, das auch dadurch **gekennzeichnet** ist,

- daß die MOSFET-Gleichrichtertransistoren (Tr1, Tr2) ein kurzes Zeitintervall (t6) nach dem Übergang des Schalters (T1) vom leitenden in den gesperrten Zustand vom leitenden in den gesperrten Zustand (Tr1) und vom gesperrten in den leitenden Zustand (Tr2) übergehen, wobei der Strom während dieses Zeitintervalls (t6) durch die interne Diode (R2) des MOSFET-Gleichrichtertransistors (Tr2) fließt;

- daß der gesamte Spannungsabfall an den Wicklungen des Transformators (M) während dieses Zeitintervalls (t6) sehr nahe bei null Volt liegt und sich die Diode (D1) im gesperrten Zustand befindet;

- daß der Drain-Source-Spannungsabfall des zweiten MOSFET-Gleichrichtertransistors (Tr2) während dieses Zeitintervalls (t6) gleich dem Katoden-Anoden-Spannungsabfall in seiner internen Diode (R2) ist und die Änderung des Zustands des zweiten MOSFETs (Tr2) von gesperrt in leitend folglich mit einer Drain-Source-Spannung erfolgt, die sehr nahe bei null Volt liegt; und

- daß der maximale Drain-Source-Spannungsabfall des ersten MOSFET-Gleichrichtertransistors (Tr1) beim Wechsel vom leitenden in den gesperrten Zustand gleich dem Katoden-Anoden-Spannungsabfall in der internen Diode des zweiten MOSFET-Gleichrichtertransistors (Tr2) ist und die Änderung des Zustands des ersten MOSFETs (Tr1) von leitend in gesperrt folglich mit einer Drain-Source-Spannung erfolgt, die sehr nahe bei null Volt liegt; und

- daß der Wechsel des ersten MOSFETs (Tr1) vom leitenden in den gesperrten Zustand und der Wechsel des zweiten MOSFETs (Tr2) vom gesperrten in den leitenden Zustand erfolgt, wenn sich der Schalter (T1) und die Diode (D1) im gesperrten Zustand befinden, wodurch es unmöglich ist, daß es beim Wechsel des ersten MOSFETs (Tr1) vom leitenden in den gesperrten Zustand und beim Wechsel des zweiten MOSFETs (Tr2) vom gesperrten in den leitenden Zustand zu einem Kurzschluß in der Hauptstromversorgung (Ve) kommt.

6. Gleichrichtungssystem für aperiodische spannungsgeschaltete Wandler nach den Ansprüchen 4 und 5, dadurch **gekennzeichnet**, daß sich die interne Diode (R1) des ersten MOSFET-Gleichrichtertransistors (Tr1) niemals in einem leitenden Zustand befindet.

7. Gleichrichtungssystem für aperiodische spannungsgeschaltete Wandler nach Anspruch 1, das alternativ im Falle eines Wandlers mit Durchflußtopologie dadurch **gekennzeichnet** ist,

- daß die MOSFET-Gleichrichtertransistoren (Tr1, Tr2) ein paar kurze Zeitintervalle (t7 für Tr1, t8 für Tr2) nach beziehungsweise vor dem Übergang des Schalters (T1) vom gesperrten in den leitenden Zustand vom gesperrten in den leitenden Zustand (Tr1) beziehungsweise vom leitenden in den gesperrten Zustand (Tr2) übergehen, wobei der Strom während dieser Zeitintervalle (t7, t8) durch die jeweiligen internen Dioden (R1, R2) der MOSFETs (Tr1, Tr2) fließt,

- daß der Drain-Source-Spannungsabfall der MOSFET-Gleichrichtertransistoren (Tr1, Tr2) während dieser Zeitintervalle (t7, t8) gleich dem Katoden-AnodenSpannungsabfall in den jeweiligen internen Dioden (R1, R2) ist und die Änderung des Zustands des ersten MOSFETs (Tr1) von gesperrt in leitend und die Änderung des Zustands des zweiten MOSFETs (Tr2) von leitend in gesperrt mit einer Drain-Source-Spannung erfolgt, die sehr nahe bei null Volt liegt;

- daß der Wechsel des zweiten MOSFETs (Tr2) vom leitenden in den gesperrten Zustand erfolgt, wenn sich der Schalter (T1) und die Diode (D1) im gesperrten Zustand befinden, wodurch es unmöglich ist, daß es beim Wechsel des zweiten MOSFETs (Tr2) vom leitenden in den gesperrten Zustand zu einem Kurzschluß in der Hauptstromversorgung (Ve) kommt; und

- daß der Wechsel des ersten MOSFETs (Tr1) vom gesperrten in den leitenden Zustand erfolgt, nachdem der Schalter (T1) in den leitenden Zustand übergegangen ist, wodurch es unmöglich ist, daß es beim Wechsel des ersten MOSFETs (Tr1) vom gesperrten in den leitenden Zustand zu einem Kurzschluß in der Hauptstromversorgung (Ve) kommt, da sich der zweite MOSFET (Tr2), seine interne Diode (R2) und die Diode (D1) in diesem Moment im gesperrten Zustand befinden.

8. Gleichrichtungssystem für aperiodische spannungsgeschaltete Wandler nach Anspruch 7, auch dadurch **gekennzeichnet**,

- daß die MOSFET-Gleichrichtertransistoren (Tr1, Tr2) ein paar kurze Zeitintervalle (t9 für Tr1, t10 für Tr2) vor beziehungsweise nach dem Übergang des Schalters (T1) vom leitenden in den gesperrten Zustand vom leitenden in den gesperrten Zustand (Tr1) beziehungsweise vom gesperrten in den leitenden Zustand (Tr2) übergehen, wobei der Strom während dieser Zeitintervalle (t9, t10) durch die jeweiligen internen Dioden (R1, R2) der MOSFETs (Tr1, Tr2) fließt;

- daß der Drain-Source-Spannungsabfall der MOSFET-Gleichrichtertransistoren (Tr1, Tr2) während dieser Zeitintervalle (t9, t10) gleich dem Katoden-AnodenSpannungsabfall in den jeweiligen internen Dioden (R1, R2) ist und die Änderung des Zustands des ersten MOSFETs (Tr1) von leitend in gesperrt und die Änderung des Zustands des zweiten MOSFETs (Tr2) von gesperrt in leitend folglich mit einer Drain-Source-Spannung erfolgt, die sehr nahe bei null Volt liegt;
- daß der Wechsel des zweiten MOSFETs (Tr2) vom gesperrten in den leitenden Zustand erfolgt, wenn sich der Schalter (T1) im gesperrten Zustand, die Diode (D1) im leitenden Zustand und der erste MOSFET (Tr1) und seine interne Diode (R1) im gesperrten Zustand befinden, wodurch es unmöglich ist, daß es beim Wechsel des zweiten MOSFETs (Tr2) vom gesperrten in den leitenden Zustand zu einem Kurzschluß in der Hauptstromversorgung (Ve) kommt; und
- daß der Wechsel des ersten MOSFETs (Tr1) vom leitenden in den gesperrten Zustand erfolgt, wenn sich der Schalter (T1) im leitenden Zustand, die Diode (D1) im gesperrten Zustand und der zweite MOSFET (Tr2) und seine interne Diode (R2) im gesperrten Zustand befinden, wodurch es unmöglich ist, daß es beim Wechsel des ersten MOSFETs (Tr1) vom leitenden in den gesperrten Zustand zu einem Kurzschluß in der Hauptstromversorgung (Ve) kommt.

**Revendications**

1. Système de redressement pour convertisseurs de tension à commutation non-résonnant, avec régulation de tension par modulation de largeur d'impulsion, utilisant des transistors de type MOSFET comme redresseurs, caractérisé en ce que :
   - les actions de commutation des transistors redresseurs MOSFET se produisent à une tension drain-source d'une valeur équivalant à la chute de tension cathode-anode d'une diode en conduction, c'est-à-dire proche de 0 volt, de sorte que l'augmentation de capacité d'entrée (effet Miller) des transistors redresseurs MOSFET est réduite aux instants où ils sont commutés ; et
   - les autres commutateurs du convertisseur sont dans un état de blocage ou de conduction, lorsque toute commutation se produit dans les transistors redresseurs MOSFET, ce qui signifie que le changement d'état du blocage à la conduction et vice versa des transistors redresseurs MOSFET ne se produit jamais en même temps que le changement d'état des autres commutateurs du convertisseur, de sorte que l'on évite qu'il se produise un court-circuit de l'alimentation principale aux instants de commutation des transistors redresseurs MOSFET.

2. Système de redressement pour convertisseurs de tension à commutation non-résonnant conforme à la revendication 1, caractérisé en ce que, dans le cas d'un redresseur ayant une topologie de type push-pull :
   - chaque transistor redresseur MOSFET (Qr2, Qr1) passe dans l'état de conduction un petit nombre de courts intervalles de temps (t2, t1) après que chaque commutateur (Q1, Q2) soit passé dans l'état de blocage ou de non-conduction, le courant, durant ces intervalles de temps (t2, t1) s'écoulant à travers les diodes internes (Dr2, Dr1) respectives des transistors redresseurs MOSFET correspondants (Qr2, Qr1) et par les canaux des autres transistors redresseurs MOSFET (Qr1, Qr2) ;
   - la chute de tension drain-source des transistors redresseurs MOSFET correspondants (Qr2, Qr1), durant ces intervalles de temps (t2, t1), est égale à la chute de tension cathode-anode de leurs diodes internes respectives (Dr2, Dr1) et, par conséquent, le changement d'état du blocage à la conduction des transistors MOSFET (Qr2, Qr1) se produit avec une tension drain-source très proche de 0 volt ; et
   - le changement d'état du blocage à la conduction de ces transistors MOSFET (Qr2, Qr1) se produit avec les commutateurs (Q1, Q2) dans l'état de blocage, de sorte qu'il est impossible qu'il se produise un court-circuit de l'alimentation principale (Ve) dans le changement d'état du blocage à la conduction des transistors redresseurs MOSFET correspondants (Qr2, Qr1).

3. Système de redressement pour convertisseurs de tension à commutation non-résonnant conforme à la revendication 2, caractérisé également en ce que :
   - les transistors redresseurs MOSFET correspondants (Qr2, Qr1) passent dans l'état de blocage un petit nombre de courts intervalles de temps (t4, t3) avant que les commutateurs respectifs (Q1, Q2) passent dans l'état de conduction, le courant, durant ces intervalles de temps (t4, t3), s'écoulant respectivement à travers les diodes internes (Dr2, Dr1) des transistors MOSFET (Qr2, Qr1) et par les canaux des transistors redresseurs MOSFET correspondants (Qr1, Qr2) ;

- la chute de tension drain-source des transistors redresseurs MOSFET correspondants (Qr2, Qr1), durant ces intervalles de temps (t4, t3), est égale à la chute de tension cathode-anode de leurs diodes internes respectives (Dr2, Dr1) et, par conséquent, le changement d'état de la conduction au blocage des transistors MOSFET (Qr2, Qr1) se produit avec une tension drain-source très proche de 0 volt ; et

- le changement d'état de la conduction au blocage de ces transistors MOSFET (Qr2, Qr1) se produit avec les commutateurs (Q1, Q2) dans l'état de blocage, de sorte qu'il est impossible qu'il se produise un court-circuit de l'alimentation principale dans le changement d'état de la conduction au blocage des transistors redresseurs MOSFET correspondants (Qr2, Qr1).

4. Système de redressement pour convertisseurs de tension à commutation non-résonnant conforme à la revendication 1, caractérisé en ce que, dans le cas d' un redresseur ayant une topologie de type forward :

- les transistor redresseur MOSFET (Tr1, Tr2) passent respectivement de l'état de blocage dans l'état de conduction (Tr1) et de l'état de conduction dans l'état de blocage (Tr2) un court intervalle de temps (t5) avant que le commutateur (T1) passe de son état de blocage dans l'état de conduction, le courant, durant cet intervalle de temps s'écoulant à travers la diode interne (R2) du transistor redresseur MOSFET (Tr2) ;

- la chute de tension drain-source du transistor redresseur MOSFET (Tr2), durant cet intervalle de temps (t5), est égale à la chute de tension cathode -anode de sa diode interne (R2) et, par conséquent, le changement d'état de la conduction au blocage du transistor MOSFET (Tr2) se produit avec une tension drain-source très proche de 0 volt ;

- la chute de tension drain-source maximale du premier transistor redresseur MOSFET (Tr1) dans le changement d'état du blocage à la conduction est égale à la chute de tension cathode-anode dans la diode interne du deuxième transistor redresseur MOSFET (Tr2) et, par conséquent, le changement d'état du blocage à la conduction du premier transistor MOSFET (Tr1) se produit avec une tension drain-source très proche de 0 volt ; et

- le changement d'état du blocage à la conduction du premier transistor MOSFET (Tr1) et de la conduction au blocage du deuxième transistor MOSFET (Tr2) se produit avec le commutateur (T1) et la diode (D1) dans l'état de blocage, de sorte qu'il est impossible qu'il se produise un court-circuit de l'alimentation principale (Ve) dans le changement d'état du blocage à la conduction du premier transistor MOSFET (Tr1) et de la conduction au blocage du deuxième transistor MOSFET (Tr2).

5. Système de redressement pour convertisseurs de tension à commutation non-résonnant conforme à la revendication 4, caractérisé également en ce que :

- les transistors redresseurs MOSFET (Tr1, Tr2) passent respectivement de l'état de conduction dans l'état de blocage (Tr1) et de l'état de blocage dans l'état de conduction (Tr2) un court intervalle de temps (t6) après que le commutateur (T1) soit passé de son état de conduction dans l'état de blocage, le courant, durant cet intervalle de temps (t6) s'écoulant à travers la diode interne (R2) du transistor redresseur MOSFET (Tr2) ;

- durant cet intervalle de temps (t6), la chute de tension totale aux bornes des enroulements du transformateur (M) est très proche de 0 volt et la diode D1 est dans son état de blocage ;

- la chute de tension drain-source du deuxième transistor redresseur MOSFET (Tr2), durant cet intervalle de temps (t6), est égale à la chute de tension cathode-anode de sa diode interne (R2) et, par conséquent, le changement d'état du blocage à la conduction du transistor MOSFET (Tr2) se produit avec une tension drain-source très proche de 0 volt ;

- la chute de tension drain-source maximale du premier transistor redresseur MOSFET (Tr1) dans le changement d'état de la conduction au blocage est égale à la chute de tension cathode-anode dans la diode interne du deuxième transistor redresseur MOSFET (Tr2) et, par conséquent, le changement d'état de la conduction au blocage du premier transistor MOSFET (Tr1) se produit avec une tension drain-source très proche de 0 volt ; et

- le changement d'état de la conduction au blocage du premier transistor MOSFET (Tr1) et du blocage à la conduction du deuxième transistor MOSFET (Tr2) se produit avec le commutateur (T1) et la diode (D1) dans l'état de blocage, de sorte qu'il est impossible qu'il se produise un court-circuit de l'alimentation principale (Ve) dans le changement d'état de la conduction au blocage du premier transistor MOSFET (Tr1) et du blocage à la conduction du deuxième transistor MOSFET (Tr2)

6. Système de redressement pour convertisseurs de tension à commutation non-résonnant conforme aux revendications 4 et 5, caractérisé en ce que la diode interne du premier transistor redresseur MOSFET (Tr1) n'est jamais dans l'état de conduction.

7. Système de redressement pour convertisseurs de tension à commutation non-résonnant conforme à la revendication 1, caractérisé en ce que, en variante, dans le cas d'un convertisseur ayant une topologie forward :
   - les transistor redresseur MOSFET (Tr1, Tr2) passent respectivement de l'état de blocage dans l'état de conduction (Tr1) et de l'état de conduction dans l'état de blocage (Tr2) un petit nombre de courts intervalles de temps (t7, pour Tr1, t8 pour Tr2) respectivement après et avant que le commutateur (T1) passe de son état de blocage dans l'état de conduction, le courant, durant ces intervalles de temps (t7, t8) s'écoulant à travers les diodes interne respectives (R1, R2) des transistors redresseurs MOSFET (Tr1, Tr2) ;
   - la chute de tension drain-source des transistors redresseurs MOSFET (Tr1, Tr2), durant ces intervalles de temps (t7, t8), est égale à la chute de tension cathode-anode des diodes interne respectives (R1, R2) et, par conséquent, le changement d'état du blocage à la conduction du premier transistor MOSFET (Tr1) et de la conduction au blocage du deuxième transistor MOSFET (Tr2) se produit avec une tension drain-source très proche de 0 volt ;
   - le changement d'état de la conduction au blocage du deuxième transistor MOSFET (Tr2) se produit avec le commutateur (T1) et la diode (D1) dans l'état de blocage, de sorte qu'il est impossible qu'il se produise un court-circuit de l'alimentation principale (Ve) dans le changement d'état de la conduction au blocage du deuxième transistor MOSFET (Tr2) ; et
   - le changement d'état du blocage à la conduction du premier transistor MOSFET (Tr1) se produit après que le commutateur (T1) soit passé dans l'état de conduction, de sorte qu'il est impossible qu'il se produise un court-circuit de l'alimentation principale (Ve) dans le changement d'état du blocage à la conduction du premier transistor MOSFET (Tr1), puisqu'à cet instant, le deuxième transistor MOSFET (Tr2), sa diode interne (R2) et la diode (D1) sont dans l'état de blocage.

8. Système de redressement pour convertisseurs de tension à commutation non-résonnant conforme à la revendication 7, caractérisé également en ce que :
   - les transistors redresseurs MOSFET (Tr1, Tr2) passent respectivement de l'état de conduction dans l'état de blocage (Tr1) et de l'état de blocage dans l'état de conduction (Tr2) un petit nombre de courts intervalles de temps (t9 pour Tr1, t10 pour Tr2), avant et après que le commutateur (T1) soit passé de son état de conduction dans l'état de blocage, le courant, durant ces intervalles de temps (t9, t10) s'écoulant à travers les diodes internes respectives (R1, R2) des transistors redresseurs MOSFET (Tr1, Tr2) ;
   - la chute de tension drain-source des transistors redresseurs MOSFET (Tr1, Tr2), durant ces intervalles de temps (t9, t10), est égale à la chute de tension cathode-anode des diodes internes respectives (R1, R2) et, par conséquent, le changement d'état de la conduction au blocage du premier transistor MOSFET (Tr1) et du blocage à la conduction du deuxième transistor MOSFET (Tr2) se produit avec une tension drain-source très proche de 0 volt ;
   - le changement d'état de la conduction au blocage du deuxième transistor MOSFET (Tr2) se produit avec le commutateur (T1) dans l'état de blocage, la diode (D1) dans l'état de conduction et le premier transistor MOSFET (Tr1) et sa diode interne (R1) dans l'état de blocage, de sorte qu'il est impossible qu'il se produise un court-circuit de l'alimentation principale (Ve) dans le changement d'état du blocage à la conduction du deuxième transistor MOSFET (Tr2) ; et
   - le changement d'état de la conduction au blocage du premier transistor MOSFET (Tr1) se produit avec le commutateur (T1) dans son état de conduction, la diode (D1) dans l'état de blocage et le deuxième transistor MOSFET (Tr2) et se diode interne (R2) dans l'état de blocage, de sorte qu'il est impossible qu'il se produise un court-circuit de l'alimentation principale (Ve) dans le changement d'état de la conduction au blocage du premier transistor MOSFET (Tr1).

FIG. 1

FIG. 2

FIG. 3

Vs

Ve

Q1  Q2

Qr1  Qr2

Dr1  Dr2

T  T/2

Vgs(Q1)

Vgs(Q2)

Vgs(Qr1)

Vgs(Qr2)

t1  t2  t3  t4

FIG. 4

FIG. 5C

FIG. 5B

FIG. 5A